# EUROPÄISCHE PATENTSCHRIFT

(11) **EP 1 298 983 B1**
(45) Veröffentlichungstag und Bekanntmachung des Hinweises auf die Patenterteilung: **25.08.2004**
(21) Anmeldenummer: 01956492.1
(22) Anmeldetag: 21.06.2001
(51) Int. Cl.: A01K 1/12

(54) **VERFAHREN UND KARUSSELL-MELKANLAGE ZUR IDENTIFIKATION EINES MELKPLATZES SOWIE EINES TIERES, INSBESONDERE EINER KUH, IN EINER KARUSSELL-MELKANLAGE**
METHOD AND ROTARY MILKING PARLOR FOR IDENTIFYING A MILKING STALL AND AN ANIMAL, ESPECIALLY A COW, IN A ROTARY MILKING PARLOR
PROCEDE ET DISPOSITIF DE TRAITE A CARROUSEL POUR L'IDENTIFICATION D'UNE ZONE DE TRAITE ET D'UN ANIMAL, EN PARTICULIER D'UNE VACHE, DANS UN DISPOSITIF DE TRAITE A CARROUSEL

(30) Priorität: 12.07.2000 DE 10033706
(43) Veröffentlichungstag der Anmeldung: 09.04.2003
(73) Patentinhaber: WestfaliaSurge GmbH, 59302 Oelde (DE)
(72) Erfinder: TECKENTRUP, Rolf, 33334 Gütersloh (DE); POHLKAMP, Manfred, 59302 Oelde (DE)
(74) Vertreter: Neumann, Ditmar
(86) Internationale Anmeldenummer: PCT/EP2001/007025
(87) Internationale Veröffentlichungsnummer: WO 2002/003783

(56) Entgegenhaltungen:
- EP-A- 0 689 761
- WO-A-00/74472
- US-A- 6 050 219

## Beschreibung

Der Gegenstand der Erfindung bezieht sich auf ein Verfahren sowie auf eine Karussel-Melkanlage zur Identifikation eines Melkplatzes und eines Tieres, insbesondere eine Kuh, in einer Karussel-Melkanlage mit einer Mehrzahl von Melkplätzen, die auf einer drehbaren Plattform angeordnet sind.

Zum Melken von Tieren, insbesondere zum Melken von Kühen, sind Karussell-Melkanlagen bekannt. Derartige Karussell-Melkanlagen können unterschiedlicher Ausgestaltung sein. Durch die DE 26 50 741 A1 ist beispielsweise eine Karussel-Melkanlage bekannt, die mehrere Melkplätze aufweist. Die Melkplätze sind Seite an Seite angeordnet. In der Fachwelt spricht man von einer Side-by-Side Karussell-Melkanlage. Bei dieser Melkanlage werden die Tiere radial einwärts zu den Melkplätzen geführt. Hierzu wird ein Gatter, welches den Eintritt in den Melkplatz ermöglicht, nach oben gezogen. Nachdem die Kuh den Melkplatz betrat, wird das Gatter wieder herunter gefahren.

Der Vorteil einer solchen Karussell-Melkanlage ist, daß eine große Anzahl von Melkplätzen auf einem kleinen Raum angeordnet werden kann.

Durch die EP 0 763 970 B1 ist eine weitere Ausgestaltung einer Karussell-Melkanlage bekannt. Bei dieser Karussell-Melkanlage handelt es sich um eine Anlage mit einer Mehrzahl von fischgrätartig angeordneten Melkplätzen, die auf einer drehbaren Melkplattform angeordnet sind.

Im Zuge der Automatisierung des Melkens sowie der Überwachung der Tiere bezüglich ihrer Milchleistung und Gesundheit ist bekannt, daß die Tiere mit einer Tiererkennungseinheit versehen werden. Bei der Tiererkennungseinheit kann es sich beispielsweise um einen Hals-/Fuß-Rescounter oder einen Halsresponder handeln, der den Identifikationscode des Tieres beinhaltet. Andere Tiererkennungseinheiten sind auch möglich.

Um die Zuordnung eines Tieres zu einem Melkplatz einer Karussell-Melkanlage vornehmen zu können, ist im Zugangsweg der Karussell-Melkanlage eine Eingangstür vorgesehen. Vor dieser Eingangstür erfolgt die Erkennung des Tieres. Nach der Erkennung des Tieres und der Identifizierung des für dieses Tier vorgesehenen Melkplatzes öffnet die Tür, wenn sich der Melkplatz vor dem Zugang befindet, so daß das Tier diesen Melkplatz betreten kann. Die Tür schließt den Zugang, so daß das nachfolgende Tier angehalten wird.

Problematisch bei einer derartigen Verfahrensführung ist, daß jedes einzelne Tier vor der Tür angehalten werden muß, damit eine sichere Zuordnung von Melkplatz und dem an diesem Melkplatz gemolkenem Tier möglich ist. Dies führt zu einem reduzierten Durchsatz pro Zeiteinheit und damit zu längeren Melkzeiten. Das Öffnen und Schließen der Tür geht mit einer Geräuschentwicklung und mit einem Verschleiß einher.

Diese Problematik ist bereits erkannt worden. Es sind daher auch Karussell-Melkanlagen bekannt, die im Zugangsweg keine Tür aufweisen bzw. deren Tür in bestimmten Melkphasen außer Funktion gesetzt wird. Die Erkennung des Tieres erfolgt bei derartigen Karussell-Melkanlagen im Zugangsweg. Hierdurch kann nicht eindeutig festgestellt werden, ob ein Tier den vorgesehenen Melkplatz auch tatsächlich einnimmt. Es besteht daher z.B. die Gefahr, daß nicht verkehrsfähige Milch eines Tieres, die eigentlich verworfen werden soll, dennoch zu der verkehrsfähigen Milch geleitet wird, da das Tier nicht den für das Tier vorgesehenen Melkplatz sondern einen anderen Melkplatz einnahm. Dieser Umstand kann dazu führen, daß die gesamte verwertbare Milch verworfen werden muß.

Hiervon ausgehend liegt der vorliegenden Erfindung die Zielsetzung zugrunde, ein Verfahren und eine Karussell-Melkanlage anzugeben, durch das bzw. durch die eine höhere Sicherheit bezüglich der Identifikation eines Melkplatzes sowie eines Tieres, insbesondere einer Kuh, und der Zuordnung des Tieres zum Melkplatz erreicht wird.

Diese Aufgabe wird erfindungsgemäß durch ein Verfahren mit den Merkmalen des Anspruchs 1 bzw. durch eine Karussell-Melkanlage mit den Merkmalen des Anspruchs 4 gelöst. Vorteilhafte Weiterbildungen und Ausgestaltungen des erfindungsgemäßen Verfahrens bzw. der erfindungsgemäßen Karussell-Melkanlage sind Gegenstand der jeweiligen abhängigen Ansprüche.

Das erfindungsgemäße Verfahren zur Identifikation eines Melkplatzes und eines Tieres, insbesondere einer Kuh, am Melkplatz einer Karussell-Melkanlage mit einer Mehrzahl von angeordneten Melkplätzen, die auf einer drehbaren Melkplattform angeordnet sind, sowie mit einem Zugangsweg zeichnet sich dadurch aus, daß ein Tier mit einer Tiererkennungseinheit zu einem Melkplatz gelangt. Es erfolgt eine Erkennung des Tieres und des Melkplatzes, in dem sich das Tier befindet, wobei Erkennungsdaten des Tieres und des Melkplatzes an eine Datenverarbeitungsanlage geleitet und dort ausgewertet werden. Die Datenverarbeitungsanlage übermittelt die für dieses Tier relevanten Tierdaten an das Terminal des identifizierten Melkplatzes. Durch diese erfindungsgemäße Verfahrensführung kann eine eindeutige Identifikation und Zuordnung eines Tieres zu einem Melkplatz erzielt werden. Hierdurch wird sichergestellt, daß eine zuverlässige Tierüberwachung während des Melkvorgangs und eine sichere Zuordnung von Melkplatz und gemolkenem Tier erreicht wird. Dadurch, daß ein jedes Tier ungehindert, d. h. durch keine Tür im Zugangsweg, wie dies nach dem Stand der Technik der Fall ist, den Melkplatz betreten kann, wird auch ein erhöhter Durchsatz pro Zeiteinheit erreicht. Ein weiterer Vorzug des erfindungsgemäßen Verfahrens kann darin gesehen werden, daß auf eine aufwendige Steuerung der Karussell-Melkanlage verzichtet werden kann, da z.B. das Öffnen/Schließen einer Tür im richtigen Moment nicht mehr erforderlich ist. Das Tier kann einen freien Melkplatz wählen.

Die Melkplattform mit dem Tier wird an einer ortsfesten Einheit zur Tiererkennung, die in Drehrichtung der Melkplattform betrachtet, dem Zugangsweg nachgeordnet ist, vorbeibewegt. Dadurch wird in vereinfachter Weise sichergestellt, daß eine eindeutige Zuordnung eines Tieres zu einem Melkplatz erfolgen kann, da die Erkennung des Tieres erst dann erfolgt, nachdem das Tier den Melkplatz bereits belegte. Die Bestimmung des Melkplatzes kann unabhängig von der Drehgeschwindigkeit der Melkplattform, dem Abstand des Tieres vom Zugangsweg, in dem das Tier zwangsweise einen Melkplatz betreten muß und der Teilung der Melkplattform erfolgen. Bevorzugt erfolgt die Bestimmung des Melkplatzes mittels einer Meßvorrichtung, durch die der Verdrehwinkel der Melkplatform und somit der Melkplatz vor dem Karussellzugang bestimmt wird.

Zur Vereinfachung des Verfahrens wird vorgeschlagen, daß zusätzlich zur Identifikation des Tieres auch eine Erkennung des Melkplatzes durch eine Einheit zur Melkplatzerkennung erfolgt. Die Einheit ist vorzugsweise durch eine Sender-Empfänger-Einheit gebildet. Insbesondere wird vorgeschlagen, daß die Identifikation des Tieres und des Melkplatzes zeitnah erfolgt.

Gemäß einem weiteren erfinderischen Gedanken wird eine Karussell-Melkanlage mit einer Mehrzahl von Melkplätzen, die auf einer drehbaren Melkplattform angeordnet sind, sowie mit einem Zugangsweg, vorgeschlagen, die sich dadurch auszeichnet, daß eine ortsfeste Einheit zur Tiererkennung vorgesehen ist, die in Drehrichtung der Melkplattform betrachtet, dem Zugangsweg so nachgeordnet ist, daß eine eindeutige Zuordnung eines Tieres zu einem Melkplatz möglich ist.

Insbesondere wird vorgeschlagen, daß eine Einheit zur Erkennung des Melkplatzes vorgesehen ist. Diese Erkennungseinheit weist ein ortsfestes und ein mit dem Melkplatz mitrotierendes Erkennungsmittel auf.

Die zeitnahe Identifikation des Tieres und des Melkplatzes kann dadurch erfolgen, daß die Karussell-Melkanlage eine ortsfeste Einheit zur Tiererkennung und eine ortsfeste Einheit zur Melkplatzerkennung aufweist, die benachbart zueinander angeordnet sind. Vorzugsweise bilden die ortsfeste Einheit zur Tiererkennung und das ortsfeste Erkennungsmittel zur Identifikation des Melkplatzes eine Baueinheit, wobei die Einheit zur Tiererkennung und die Einheit zur Identifikation so ausgebildet sind, daß eine gegenseitige negative Beeinflussung nicht stattfindet

Zu einer eindeutigen Erkennung sowie zur Vereinfachung des konstruktiven Aufwandes zur Ausbildung einer Karussell-Melkanlage wird vorgeschlagen, daß die ortsfeste Einheit seitlich von der Plattform angeordnet ist. Die seitliche Anordnung kann an der Außen- und/oder an der Innenseite der Melkplattform erfolgen. Die vertikale Lage der ortsfesten Einheit zur Tieridentifikation kann von den Identifikationsmitteln, die das Tier trägt, abhängig sein.

Nach einer noch weiteren vorteilhaften Ausgestaltung der erfindungsgemäßen Karussell-Melkanlage wird vorgeschlagen, daß die ortsfeste Einheit und/oder das ortsfeste Erkennungsmittel unterhalb und/oder oberhalb der Melkplattform angeordnet ist bzw. sind.

Bei der Karussell-Melkanlage handelt es sich vorzugsweise um eine Melkanlage mit fischgrätartig angeordneten Melkplätzen. Andere Formen und Ausgestaltungen der Karussel-Melkanlage sind ebenfalls möglich. Auch das erfindungsgemäße Verfahren ist bevorzugt bei einer Karussell-Melkanlage einzusetzen, die eine Vielzahl von fischgrätartig angeordneten Melkplätzen aufweist.

Weitere Einzelheiten und Vorteile des Verfahrens sowie der Karussell-Melkanlage werden anhand der in der Zeichnung dargestellten, bevorzugten Ausführungsbeispiele erläutert.

Es zeigen:
- Fig. 1: schematisch und in einer Draufsicht ein erstes Ausführungsbeispiel einer Karussell-Melkanlage und
- Fig. 2: ein zweites Ausführungsbeispiel einer Karussell-Melkanlage in einer Draufsicht.

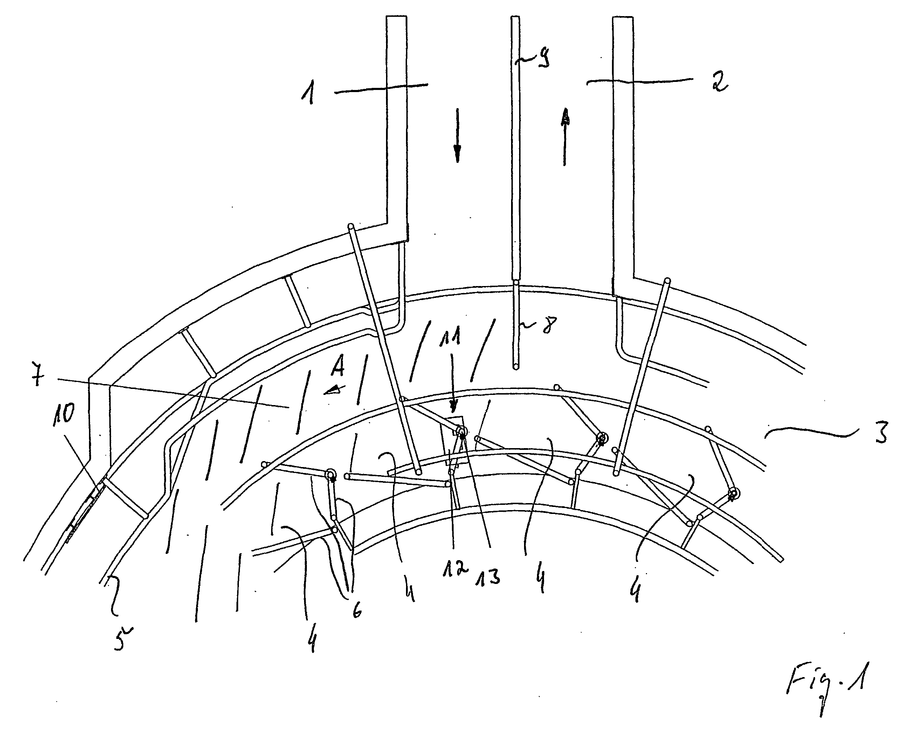

Fig. 1 zeigt schematisch und in einer Draufsicht einen Ausschnitt einer Karussell-Melkanlage. Die Karussell-Melkanlage weist einen Zugangsweg 1 zu einer sich drehenden Melkplattform 3 auf. Die Drehrichtung der Melkplattform 3 ist in der Fig. 1 durch einen Pfeil A dargestellt. Parallel zu dem Zugangsweg 1 verläuft ein Ausgangsweg 2. Der Zugangsweg 1 und der Ausgangsweg 2 sind voneinander durch eine Trennwand 9 voneinander getrennt. An der, der Melkplattform 3 benachbarten Stirnfläche der Trennwand 9 ist ein um eine vertikal verlaufende Achse verschwenkbarer Abweiser 8 vorgesehen. Der Abweiser 8 ragt oberhalb der Melkplattform 3 in den Standbereich der Tiere hinein.

Auf der drehbaren Melkplattform 3 sind nach dem bevorzugten Ausführungsbeispiel mehrere fischgrätartig angeordnete Melkplätze 4 ausgebildet. Jeder Melkplatz 4 ist durch eine Melkplatzbegrenzung 6 gebildet. Die Melkplatzbegrenzung 6 ist im wesentlichen U-förmig ausgebildet. Die Melkplatzbegrenzungen sind zum äußeren Randbereich der Melkplattform 3 hin offen. Sie sind in bekannter Weise durch Gatter gebildet. Der äußere Bereich der Melkplätze 6 ist durch eine stationäre äußere Begrenzung 5 gebildet. Andere Formen und Ausführungen der Melkplatzbegrenzung sind ebenfalls möglich.

Von dem Zugangsweg 1 aus betrachtet und in Drehrichtung der Melkplattform 3 gesehen geht der Zugangsweg 1 in einen Belegbereich 7 über. Der Belegbereich 7 ist in der Figur 1 schraffiert dargestellt. Dieser Belegbereich 7 verengt sich in Drehrichtung der Melkplattform 3 betrachtet. Dem Belegbereich 7 nachgeordnet ist eine ortsfeste Einheit 10 zur Tiererkennung angeordnet. Die ortsfeste Einheit 10 ist in dem dargestellten Ausführungsbeispiel seitlich der Melkplattform 3 und im wesentlichen in einer vertikalen Ebene angeordnet. In dem dargestellten Ausführungsbeispiel ist die ortsfeste Einheit zur Tiererkennung dem Belegbereich 7 nachgeordnet. Dies ist nicht zwingend notwendig. Die ortsfeste Einheit 10 zur Tiererkennung kann auch im Belegbereich 7 angeordnet sein. Wesentlich ist, daß die ortsfeste Einheit 10 zur Tiererkennung in einem solchen Bereich der Karussell-Melkanlage angeordnet ist, daß eine eindeutige Zuordnung des identifizierten Tieres zu einem bestimmten Melkplatz ermöglicht wird.

Mit dem Bezugszeichen 11 ist eine Einheit zur Erkennung eines Melkplatzes 4 bezeichnet. Die Einheit zur Erkennung eines Melkplatzes weist ein ortsfestes Erkennungsmittel 12 auf Die Einheit zur Erkennung eines Melkplatzes weist des weiteren ein mit einem Melkplatz 4 mitrotierendes Erkennungsmittel 13 auf. Das Erkennungsmittel 13 ist vorzugsweise bei einem jeden Melkplatz 4 vorgesehen. Die Einheit zur Erkennung eines Melkplatzes ist vorzugsweise in Form einer Sender/Empfänger-Einheit ausgebildet. Andere Ausgestaltungen sind möglich.

Betritt ein Tier, insbesondere eine Kuh, den Zugangsweg 1, so kann es ungehindert die Melkplattform 3 betreten. Es kann in den sich verengenden Belegbereich 7 gelangen. Durch die Drehung der Melkplattform 3 wird das sich im Belegbereich 7 befindende Tier von der Melkplatzbegrenzung 6 erfaßt und derart geführt, daß das Tier am Melkplatz 4 positioniert wird. Das sich am Melkplatz 4 befindende Tier wird an der ortsfesten Einheit 10 zur Identifikation des Tieresvorbeibewegt. Das Tier, welches eine Erkennungseinheit trägt, wird durch die ortsfeste Einheit 10 identifiziert. Der Identifikationscode des Tieres und der des Melkplatzes wird an eine nicht dargestellte Datenverarbeitungsanlage weiter gegeben. Die Datenverarbeitungsanlage sendet denn die relevanten Tierdaten an das Melkplatzterminal des Platzes, an dem sich das zu melkende Tier befindet. Der Melkvorgang als solcher kann anschließend ausgeführt werden. Zur Zuordnung des erkannten Tieres zu einem bestimmten Melkplatz dient die Einheit 11. Durch das ortsfeste Erkennungsmittel 12 und das mitrotierende, einem bestimmten Melkplatz zugeordnete Erkennungsmittel 13 wird der Melkplatz identifiziert, in den das Tier gelangte. In der Fig. 1 ist dargestellt, daß die Einheit 11 zur Erkennung des Melkplatzes in Drehrichtung der Melkplattform 3 betrachtet vor der ortsfesten Einheit 10 zur Erkennung eines Tieres angeordnet ist. Dies ist nicht zwingend notwendig. Das ortsfeste Erkennungsmittel 12 der Einheit 11 zur Melkplatzerkennung kann auch benachbart zur ortsfesten Einheit 10 zur Tiererkennung angeordnet sein. Eine nachgeordnete Anordnung ist auch möglich. Die benachbarte Anordnung eines ortsfesten Erkennungsmittels der Einheit zur Melkplatzkennung sowie der ortsfesten Einheit zur Tiererkennung erfolgt vorzugsweise derart, daß in Abhängigkeit von der Arbeitsweise der Einheit zur Melkplatzerkennung und der Einheit zur Tiererkennung, eine gegenseitige Beeinflussung ausgeschlossen wird. Dies ist insbesondere dann zu berücksichtigen, wenn entsprechend einer vorteilhaften Ausgestaltung der erfindungsgemäßen Vorrichtung die ortsfeste Einheit zur Tiererkennung und die Einheit zur Melkplatzerkennung eine Baueinheit bilden.

Nachdem das Tier ausgemolken wurde und die Melkplattform 3 mit dem Tier benachbart zum Ausgangsweg 2 gelangt, kann das Tier aus dem Melkplatz 4 heraustreten. Hierbei bewirkt der Abweiser 8, der in Fahrtrichtung des Tieres hineinragt, daß das Tier den Melkplatz 4 verläßt.

In dem dargestellten Ausführungsbeispiel ist die ortsfeste Einheit 10 so angeordnet, daß diese zur Identifikation von Hals-Respondern und Hals-Rescountern, die die Tiere tragen, geeignet ist.

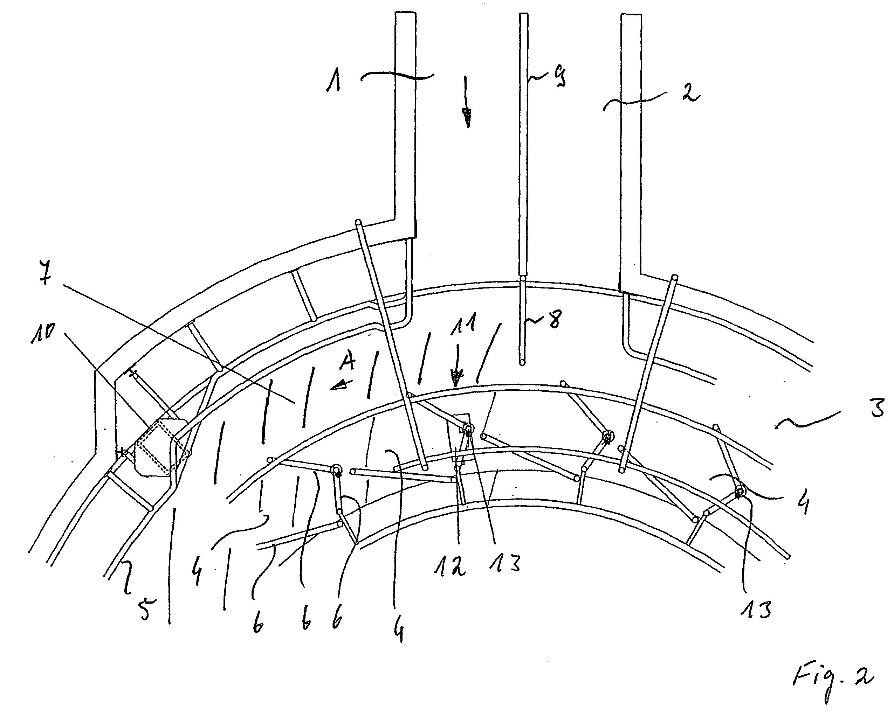

Fig. 2 zeigt ein zweites Ausführungsbeispiel einer Karussell-Melkanlage in einer Draufsicht. Der prinzipielle Aufbau der Karussell-Melkanlage nach Fig. 2 stimmt mit dem Aufbau der Karussell-Melkanlage nach Fig. 1 überein. Es wird daher vollinhaltlich auf die Beschreibung der Karussell-Melkanlage nach Fig. 1 verwiesen.

Die Karussell-Melkanlage nach Fig. 2 unterscheidet sich von der in der Fig. 1 dargestellten Karussell-Melkanlage durch die Anordnung der ortsfesten Einheit 10 zur Tiererkennung. Die ortsfeste Einheit 10 ist in dem dargestellten Ausführungsbeispiel nach Fig. 2 seitlich angeordnet. Bei der ortsfesten Einheit 10 handelt es sich um eine Einheit, die mit am Fuß des Tieres angeordneten Identifikationsmitteln zusammenwirkt. Die ortsfeste Einheit 10 ist in Form eines Erkennungsrahmens ausgebildet, der im wesentlichen in einer horizontalen Ebene angeordnet ist.

### Bezugszeichenliste:

- 1: Zugangsweg
- 2: Ausgangsweg
- 3: Melkplattform
- 4: Melkplatz
- 5: äußere Begrenzung
- 6: Melkplatzbegrenzung
- 7: Belegbereich
- 8: Abweiser
- 9: Trennwand
- 10: ortsfeste Einheit zur Tiererkennung
- 11: Einheit zur Melkplatzerkennung
- 12: ortsfestes Erkennungsmittel der Einheit 11
- 13: mitrotierendes Erkennungsmittel der Einheit 11

## Patentansprüche

1. Verfahren zur Identifikation eines Melkplatzes (4) sowie eines sich am Melkplatz befindenden Tieres, insbesondere einer Kuh, in einer Karussell-Melkanlage mit einer Mehrzahl von Melkplätzen (4), die auf einer drehbaren Melkplattform (3) angeordnet sind, sowie mit einem Zugangsweg (1) und einem Ausgangsweg (2) **gekennzeichnet durch** Zuführen eines Tieres mit einer Erkennungseinheit in einen Melkplatz (4), Identifikation des Tieres und des Melkplatzes (4), in dem sich das Tier befindet, wobei die Melkplattform (3) mit dem Tier an einer ortsfesten Einheit (10) zur Tiererkennung, die in Drehrichtung der Melkplattform (3) betrachtet, dem Zugangsweg (1) nachgeordnet ist, vorbei bewegt wird, und **durch** Weiterleitung und Auswertung der Erkennungsdaten des Tieres und des Melkplatzes in einer Datenverarbeitungsanlage.

2. Verfahren nach Anspruch 1, **dadurch gekennzeichnet, daß** die Erkennung des Melkplatzes (4) durch eine Sender/Empfänger-Einheit (11) erfolgt.

3. Verfahren nach Anspruch 1 oder 2, **dadurch gekennzeichnet, daß** die Tiererkennung und die Melkplatzerkennung zeitnah erfolgt.

4. Karussell-Melkanlage mit einer Mehrzahl von Melkplätzen (4), die auf einer drehbaren Melkplattform (3) angeordnet sind, sowie mit einem Zugangsweg (1) und einem Ausgangsweg (2), **dadurch gekennzeichnet, daß** eine ortsfeste Einheit (10) zur Tiererkennung vorgesehen ist, die in Drehrichtung der Melkplattform (3) betrachtet, dem Zugangsweg (1) so nachgeordnet ist, daß eine eindeutige Zuordnung eines Tieres zu einem Melkplatz (4) möglich ist

5. Karussell-Melkanlage nach Anspruch 4, **dadurch gekennzeichnet, daß** eine Melkplatz-Einheit (11) zur Erkennung eines Melkplatzes vorgesehen ist, die ein ortsfestes (12) und ein mit dem Melkplatz (3) rotierendes (13) Erkennungsmittel aufweist.

6. Karussell-Melkanlage nach Anspruch 5, **dadurch gekennzeichnet, daß** die ortsfeste Einheit (10) und das ortsfeste Erkennungsmittel (12) benachbart zueinander angeordnet sind.

7. Karussell-Melkanlage nach Anspruch 6, **dadurch gekennzeichnet, daß** die ortsfeste Einheit (10) und das ortsfeste Erkennungsmittel (12) eine Baueinheit bilden.

8. Karussell-Melkanlage nach einem der Ansprüche 4 bis 7, **dadurch gekennzeichnet, daß** die ortsfeste Einheit (10) und/oder das ortsfeste Erkennungsmittel (12) seitlich an der Außen- oder/und Innenseite der Melkplattform (3) angeordnet ist bzw. sind.

9. Karussell-Melkeinheit nach einem der Ansprüche 4 bis 8, **dadurch gekennzeichnet, daß** die ortsfeste Einheit (10) und/oder das ortsfeste Erkennungsmittel (12) oberhalb und/oder unterhalb der Melkplattform (3) angeordnet ist bzw. sind.

## Claims

1. Method for the identification of a milking stall (4) and of an animal located in the milking stall, in particular a cow, in a rotary milking parlor with a plurality of milking stalls (4), which are disposed on a rotatable milking platform (3), as well with an entrance path (1) and an exit path (2), **characterized by** guiding of an animal with a recognition device into a milking stall (4), identification of the animal and of the milking stall (4), in which the animal is located, wherein the milking platform (3) with the animal is passed by a fixed unit (10) for animal recognition, said fixed unit being disposed downstream of the entrance path (1), as observed in the direction of rotation of the milking platform (3), and by transmission and evaluation of the recognition data for the animal and for the milking stall in a data processing system.

2. Method according to claim 1, **characterized in that** the recognition of the milking stall (4) is done by a transmitter/receiver unit (11).

3. Method according to claim 1 or 2, **characterized in that** the recognition of the animal and the milking stall occur in close proximity in time.

4. Rotary milking parlor with a plurality of milking stalls (4), which are disposed on a rotary milking platform (3), and with an entrance path (1) and an exit path (2), **characterized in that** a fixed unit (10) for animal recognition is provided, said fixed unit being disposed downstream of the entrance path (1), as observed in the direction of rotation of the milking platform (3), so that an unambiguous assignment of an animal to a milking stall (4) is possible.

5. Rotary milking parlor according to claim 4, **characterized in that** a milking stall unit (11) for the recognition of a milking stall is provided, which has a fixed recognition means (12) and a recognition means (13) rotating with the milking stall (3).

6. Rotary milking parlor according to claim 5, **characterized in that** the fixed unit (10) and the fixed recognition means (12) are disposed adjacent to one another.

7. Rotary milking parlor according to claim 6, **characterized in that** the fixed unit (10) and the fixed recognition means (12) form a structural unit.

8. Rotary milking parlor according to one of claims 4 to 7, **characterized in that** the fixed unit (10) and/or the fixed recognition means (12) are/is disposed laterally on the outer side and/or on the inner side of the milking platform (3).

9. Rotary milking parlor according to one of claims 4 to 8, **characterized in that** the fixed unit (10) and/or the fixed recognition means (12) is/are disposed above and/or below the milking platform (3).

## Revendications

1. Procédé pour l'identification d'une zone de traite (4) et d'un animal, notamment d'une vache, se trouvant dans la zone de traite, dans une installation de traite à carrousel avec une pluralité de zones de traite (4) qui sont agencées sur une plateforme de traite rotative (3), ainsi qu'avec une voie d'accès (1) et une voie de sortie (2), **caractérisé par** l'amenée d'un animal avec une unité de reconnaissance dans une zone de traite (4), identification de l'animal et de la zone de traite (4), dans laquelle se trouve l'animal, dans quel cas la plateforme de traite (3) avec l'animal est déplacée à coté d'une unité stationnaire (10) pour la reconnaissance de l'animal, qui - vu dans le sans de rotation de la plateforme de traite (3) - est agencée en aval de la voie d'accès (1), et **caractérisé par** la transmission et l'analyse des données de reconnaissance de l'animal et de la zone de traite dans une installation de traitement de données.

2. Procédé selon la revendication 1, **caractérisé en ce que** la reconnaissance de la zone de traite (4) est effectuée par une unité émetteur/récepteur (11).

3. Procédé selon la revendication 1 ou 2, **caractérisé en ce que** la reconnaissance de l'animal et la reconnaissance de la zone de traite sont effectuées avec proximité temporelle.

4. Installation de traite à carrousel avec une pluralité de zones de traite (4) qui sont agencées sur une plateforme de traite rotative (3), ainsi qu'avec une voie d'accès (1) et une voie de sortie (2), **caractérisée en ce qu'**une unité stationnaire (10) est prévue pour la reconnaissance de l'animal qui, vu dans le sens de rotation de la plateforme de traite (3), est agencée de telle manière en aval de la voie d'accès (1) qu'une association claire d'un animal à une zone de traite (4) est possible.

5. Installation de traite à carrousel selon la revendication 4, **caractérisée en ce qu'**une unité de zone de traite (11) est prévue pour la reconnaissance d'une zone de traite qui présente un moyen de reconnaissance stationnaire (12) et un moyen de reconnaissance en rotation (13) avec la zone de traite (3).

6. Installation de traite à carrousel selon la revendication 5, **caractérisée en ce que** l'unité stationnaire (10) et le moyen de reconnaissance stationnaire (12) sont agencés de manière adjacente l'un à l'autre.

7. Installation de traite à carrousel selon la revendication 6, **caractérisée en ce que** l'unité stationnaire (10) et le moyen de reconnaissance stationnaire (12) forment une unité de construction.

8. Installation de traite à carrousel selon l'une des revendications 4 à 7, **caractérisée en ce que** l'unité stationnaire (10) et/ou le moyen de reconnaissance stationnaire (12) est/sont agencé(s) latéralement sur la face extérieure ou/et intérieure de la plateforme de traite (3).

9. Installation de traite à carrousel selon l'une des revendications 4 à 8, **caractérisée en ce que** l'unité stationnaire (10) et/ou le moyen de reconnaissance stationnaire (12) est/sont agencé(s) au dessus et/ou en dessous de la plateforme de traite (3).
